# EUROPEAN PATENT APPLICATION

(11) **EP 4 796 186 A1**
(43) Date of publication of application: **26.08.2026**
(21) Application number: 25158971.9
(22) Date of filing: 19.02.2025
(51) Int. Cl.: A62C 3/02, A62C 29/00, B64D 1/16, B64U 101/47

(54) **A FIRE SUPPRESSION SYSTEM AND METHOD FOR AERIAL DEPLOYMENT**

(71) Applicant: Salutes Space UG (Haftungsbeschränkt), 82234 Weßling (DE)
(72) Inventor: Sobhy Abdelsalam Fouda, Mohamed, 85570 Markt Schwaben (DE)
(74) Representative: Anidjar Mogeda, Miriam

(57) **Abstract**

The invention relates to an autonomous fire suppression system and method designed for rapid aerial deployment. The system comprises a hexagonal rocket body (2) for aerodynamic stability, retractable propellers (1) for drone-mode operation, and a payload compartment (3) housing at least one fire suppressant sphere (4). A deployment mechanism (5) releases the propellers (1) and disperses the suppressant over a fire zone. The system is controlled by a robot-on-chip module (6) that processes sensor data from thermal and infrared sensors (7), wind and pressure sensors (8), and a GPS and IMU unit (9) to determine optimal suppressant release. The system can autonomously detect fire hotspots, adjust its flight path, and release the suppressant in either a capsule drop or mid-air dispersal mode. A communications module (10) provides real-time telemetry and remote control. The system ensures efficient wildfire suppression with minimal human intervention, offering enhanced precision and adaptability in high-risk environments.

## Description

### Technical field

The present invention relates to firefighting and emergency response systems, particularly involving unmanned aerial vehicles (drones) equipped with advanced fire-suppressant materials and autonomous navigation systems for use in wildfire conditions.

### Prior art

Wildfires have become an increasingly critical global issue, exacerbated by factors such as prolonged droughts, rising temperatures, and unpredictable wind patterns. Traditional firefighting methods, including ground crews, water bombers, and chemical air drops, face significant challenges in effectively combating wildfires, particularly under volatile conditions. Key limitations of these conventional approaches include access barriers, setup delays and accuracy issues.

In fact, ground crews often struggle to reach remote or difficult terrains, delaying response times and reducing effectiveness. Furthermore, aircraft, such as planes and helicopters, require specialized infrastructure and are often hindered by flight hazards, including heavy smoke and strong winds. Finally, large-scale aerial drops frequently lack the precision needed to target specific hotspots, leading to inefficient use of resources and limited impact on fire containment. To address these challenges, there is a pressing need for technology that combines rapid deployment with precise, localized delivery of fire-suppressant materials.

The present invention seeks to overcome these limitations by integrating rocket-like speed for immediate deployment to the fire zone, drone-like maneuverability for precise control and localized intervention and a transformative fire-suppressant material that adheres to flames and combustibles, effectively limiting the spread of the fire.

Document KR20190103766A for a "Firefighting Drone Employing Launching Device Grenade-Shaped Extinguisher for Emergency Fire Suppression" describes a firefighting drone equipped with a launcher for grenade-shaped fire extinguishers. The drone is designed to suppress fires by launching fire-extinguishing bullets loaded with compressed gas. The system includes a power supply unit and a control unit that selectively supplies power to the launcher based on signals from a ground control system (GCS). The drone is capable of acquiring image information and delivering fire-extinguishing capabilities to the fire site, overcoming the limitations of traditional manned response systems. The invention emphasizes rapid response and precise delivery of fire suppressants, particularly in emergency situations.

Document US2022348328A1 for an "Emergency Response Drone" discloses a firefighting aerial vessel (drone) capable of coordinating with other drones to extinguish fires. The drone features a propulsion system that allows it to move and rotate in three-dimensional space, enabling precise maneuvering. The drone carries a container with fire-extinguishing substances, which are delivered through spray units mounted on the exterior of the vessel. The system includes a communication and positioning system to coordinate movements with other drones, form specific formations to surround and suppress fires. The invention highlights the importance of rapid response, situational awareness, and coordinated efforts in firefighting operations.

Document US11794896B2 for an "Emergency Response Drone" describes an emergency response drone equipped with a multidirectional propulsion system and data-capturing equipment. The drone is designed to provide real-time information and situational awareness during emergency responses. The propulsion system includes multiple propulsion elements arranged in a circular pattern, allowing the drone to move in any direction within a 360-degree coordinate system. The drone is equipped with various sensors, including infrared scanners, visible light image capture devices, and motion sensors, to collect and disseminate critical information. The invention emphasizes the drone's ability to quickly reach emergency sites, gather data, and assist in coordinating responses, particularly in high-risk situations such as wildfires.

The prior art documents highlight several key advancements in firefighting and emergency response technologies, particularly in the use of drones for rapid deployment and precise delivery of fire suppressants. However, these technologies often focus on either the delivery mechanism (e.g., grenade-shaped extinguishers) or the coordination of multiple drones for large-scale fire suppression. The present invention distinguishes itself by integrating rocket-like speed with drone-like maneuverability, enabling immediate and precise intervention in wildfire conditions. Additionally, the use of a specialized fire-suppressant material that transforms into a sticky gel upon exposure to ambient humidity represents a significant improvement over traditional firefighting methods, offering enhanced effectiveness in limiting fire spread.

In summary, while the prior art demonstrates the use of drones for firefighting and emergency response, the present invention introduces a novel combination of speed, precision, and advanced fire-suppressant technology, addressing the critical need for rapid and accurate intervention in wildfire scenarios.

### Summary

The present invention relates to a wildfire suppression system, hereinafter referred to as the system of the invention, which integrates aerial propulsion, autonomous flight control, and advanced fire suppressant technology to provide a rapid, precise, and effective response to wildfire outbreaks. The system is designed to overcome the limitations of conventional firefighting drones and rockets by combining the high-speed deployment capabilities of a rocket with the precision and maneuverability of a drone, ensuring optimal fire suppression in challenging and volatile environments.

The invention comprises a hexagonal rocket body that enhances aerodynamic stability and wind tolerance, allowing the system to maintain a stable trajectory even in high-wind conditions, which are common in wildfire scenarios. This geometric configuration reduces aerodynamic turbulence and ensures predictable flight dynamics, making it highly effective for targeted fire suppression.

The system is further equipped with retractable drone propellers, which remain folded during the high-speed ascent phase to minimize drag and maximize propulsion efficiency. Upon reaching the target area, these spring-loaded propellers deploy automatically, enabling low-altitude hover and precise flight control. This dual-mode operation combines the speed of a rocket with the agility of a drone, addressing the shortcomings of traditional aerial firefighting systems, which either lack precision (rockets) or have limited deployment speed and range (drones).

A key feature of the invention is the fire suppressant, a fire-extinguishing composition that remains in a dry, compact state during storage and transportation but transforms into a viscous, sticky gel upon contact with atmospheric humidity. This unique chemical formulation allows the suppressant to adhere effectively to combustible materials, providing enhanced flame suppression and resistance to re-ignition, even in strong wind conditions or dry environments where conventional liquid suppressants may evaporate or disperse prematurely.

The system is autonomously controlled by a Robot-on-Chip (RoC) module, an integrated computational unit that processes sensor data, executes flight algorithms, and makes real-time adjustments to stabilize the device and optimize suppressant delivery. The RoC module enables the system to autonomously navigate complex fire environments, compensate for unpredictable wind patterns, and identify optimal fire suppression zones with minimal human intervention. This level of automation significantly improves operational efficiency compared to existing aerial firefighting systems, which often require manual remote control or lack adaptability in rapidly changing conditions.

In comparison with prior art, the system of the invention introduces several technical advantages. First, its combination of rocket propulsion and drone flight allows for significantly faster deployment and greater operational range than traditional firefighting drones. Second, the fire suppressant provides superior adhesion and extended fire suppression effectiveness, unlike conventional water- or foam-based solutions that may lose efficacy due to environmental conditions. Third, the hexagonal rocket body enhances aerodynamic stability, ensuring reliable operation even in high-wind wildfire scenarios, where many conventional aerial firefighting platforms struggle to maintain control. Finally, the integration of the RoC module enables fully autonomous operation, allowing the system to adapt to environmental changes without the need for continuous operator input.

Through this innovative integration of high-speed aerial propulsion, adaptive flight control, and next-generation fire suppression technology, the system of the invention provides a powerful solution for combating wildfires with greater efficiency, precision, and adaptability than conventional aerial suppression methods. The invention is particularly suited for deployment in hard-to-reach wildfire zones, mountainous terrain, and high-risk fire-prone areas, where rapid and autonomous intervention is critical for mitigating fire spread and minimizing ecological and infrastructural damage.

Throughout the description and claims the word "comprises" and its variants are not intended to exclude other technical characteristics, additives, components, or steps. For those skilled in the art, other objects, advantages, and features of the invention will emerge partly from the description and partly from the practice of the invention. The following examples and drawings are provided by way of illustration and are not intended to restrict the present invention. Furthermore, the present invention covers all possible combinations of particular and preferred embodiments indicated herein.

### Brief description of drawings

The following series of drawings provides an overview of the invention, specifically focusing on representatives embodiments that serve as a non-limiting example of the invention.
Figure 1 illustrates the system of the invention in its initial, retracted configuration.
Figure 2 illustrates the system of the invention after the transition phase.
Figure 3 Figure 3 illustrates the system in an operational state.
Figure 4 presents a block diagram illustrating the operational flow of the system.

In the figures, the following reference numbers are used:
(1) Propellers. Retractable drone propellers that remain folded during ascent and deploy for controlled flight.
(2) Hexagonal Rocket Body. The main structural component provides aerodynamic stability and mechanical strength.
(3) Payload Compartment. Internal storage section housing the fire suppressant.
(4) Fire Suppressant Sphere. Spherical container carrying the dry chemical suppressant that activates upon release.
(5) Deployment Mechanism. Latch and release system that activates the propeller deployment and payload dispersal.
(6) Robot-on-Chip Control Module which is an integrated computational system responsible for autonomous navigation, flight adjustments, and suppressant deployment.
(7) Thermal and Infrared Sensor array detecting fire boundaries, temperature variations, and environmental conditions.
(8) Wind and Pressure Sensors monitor ambient wind conditions to adjust flight stability.
(9) GPS and IMU Unit. Navigation system ensuring precise positioning and orientation of the system.
(10) Communications Module. Component enabling remote monitoring and manual control override.

### Detailed description of the preferred embodiment

The system of the invention provides an advanced aerial platform for wildfire suppression, combining high-speed deployment, autonomous control, and an innovative fire suppressant delivery mechanism. The system is designed to be launched as a rocket, transition into drone mode upon reaching the target area, and deploy a fire suppressant via controlled dispersal mechanisms. The system incorporates a hexagonal rocket body (2), retractable drone propellers (1), an onboard Robot-on-Chip control module (6), and a proprietary fire suppressant formulation housed within the payload compartment (3).

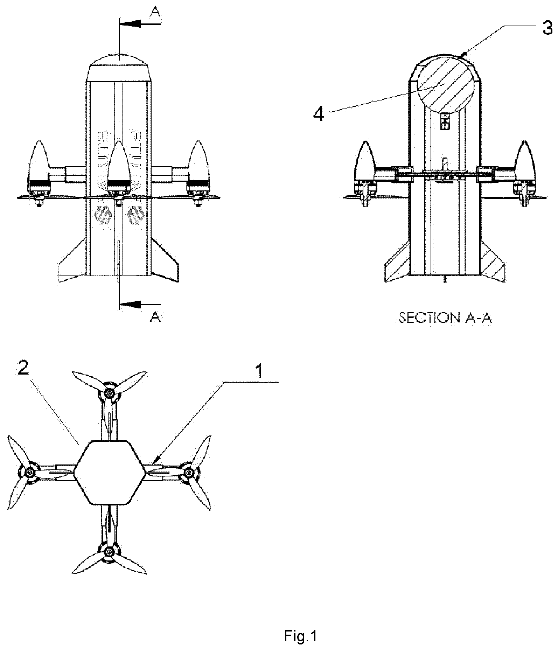

Figure 1 illustrates the system in its initial, retracted configuration, where all aerodynamic and structural components are designed to optimize its high-speed ascent phase. The hexagonal rocket body (2) has a six-sided cross-section, which provides enhanced aerodynamic stability by reducing turbulence and improving directional control in strong crosswinds. This structural geometry also ensures high mechanical strength, enabling the system to withstand the stresses of launch and atmospheric re-entry. The body is preferably made from heat-resistant materials such as carbon-fiber composites or titanium alloys to endure extreme temperatures near the fire zone. The propellers (1) remain folded against the exterior of the rocket body (2), as shown in section A-A, reducing drag and preventing premature deployment. The deployment mechanism (5), located internally, consists of a mechanical or electronic latch that ensures the propellers (1) remain locked in place during the ascent phase.

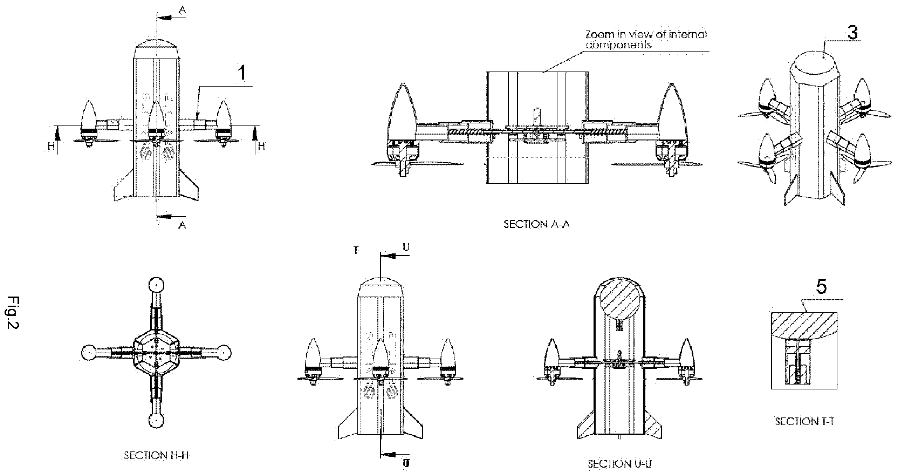

Figure 2 shows the system after the transition phase, where the propellers (1) have been deployed. This figure highlights the propulsion and maneuverability mechanisms that allow the system to operate as a drone upon reaching the target wildfire zone. The section A-A view shows the propellers (1) fully extended, enabling controlled flight for hovering, vertical lift, and lateral movement. Each propeller (1) is powered by an electric or hybrid motor to provide sustained thrust. The deployment mechanism (5), seen in section H-H, includes a release latch system that activates once the system reaches a predefined altitude and location. The payload compartment (3), shown in section T-T, houses the fire suppressant sphere (4) and dispersal mechanism. The U-U section illustrates the payload deploying device (5), which ensures controlled release of the suppressant based on data from the onboard Robot-on-Chip control module (6).

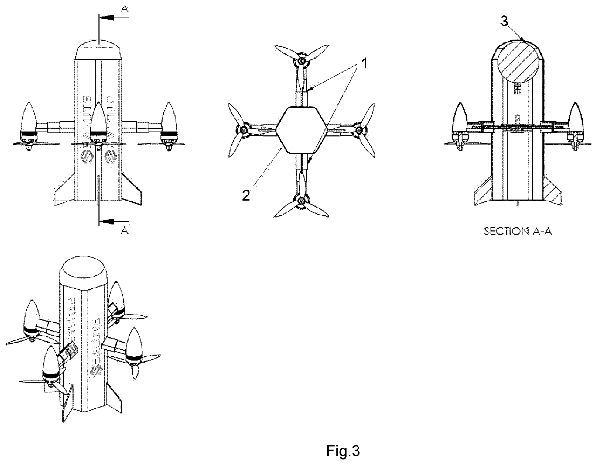

Figure 3 illustrates the system in an operational state with two propellers (1) deployed. This intermediate configuration allows the system to maintain stability while releasing the fire suppressant sphere (4) at an optimal altitude. The section A-A view demonstrates how the system adjusts its propulsion settings in response to environmental conditions, ensuring effective targeting of the fire zone. The Robot-on-Chip control module (6) continuously processes real-time sensor data from the thermal and infrared sensors (7), which detect fire hot spots and temperature variations, as well as the wind and pressure sensors (8), which monitor ambient wind conditions for stability adjustments. The GPS and IMU unit (9) provide precise navigation, maintaining flight stability and ensuring accurate suppressant delivery.

The fire suppressant used in the system is a proprietary dry chemical formulation housed in the fire suppressant sphere (4), designed to transition into a sticky gel upon exposure to atmospheric humidity. The suppressant composition, which may include phosphate salts and gelling agents, adheres to combustible materials, reducing oxygen availability and absorbing heat to suppress further combustion. The suppressant is deployed through two primary methods: capsule drop and mid-air dispersal. In the capsule drop mode, the payload compartment (3) releases fire suppressant spheres (4), which rupture upon impact, dispersing the dry mixture that gels upon contact with moisture or heated air. In the mid-air dispersal mode, the payload deploying device (5) releases the suppressant in a controlled burst, ensuring even coverage over the fire zone.

The system is controlled by a compact Robot-on-Chip control module (6), which includes a high-efficiency processor capable of executing Al-driven flight algorithms. The sensor array, comprising thermal and infrared sensors (7), wind and pressure sensors (8), and the GPS and IMU unit (9), allows the system to autonomously adapt to environmental conditions. The flight controller, integrated into the Robot-on-Chip control module (6), continuously adjusts the propeller (1) speeds and angles to maintain stability and counteract turbulence. The onboard Al predicts wind shifts and optimizes the release timing of the fire suppressant sphere (4), enhancing efficiency in dynamic wildfire conditions. The communications module (10) provides real-time telemetry to ground control and allows operators to override autonomous decisions when necessary.

The launch and deployment sequence follows a structured operational flow. The system is initially placed on a launch pad or integrated into a vehicle-based launcher, where solid or hybrid propellants provide the initial thrust. During ascent, the hexagonal rocket body (2) ensures aerodynamic stability while the propellers (1) remain locked in their retracted position via the deployment mechanism (5). Upon reaching the wildfire zone, the booster engine cuts off or throttles down, triggering the spring-loaded release of the propellers (1). The system then transitions to drone mode, hovering over identified fire hotspots while continuously adjusting to wind and environmental changes. The fire suppressant sphere (4) is released based on autonomous calculations or manual command, ensuring targeted suppressant deployment. After the suppression operation, the system can either land for retrieval or execute a controlled burnout and disposal sequence.

To ensure safety and environmental compliance, the system incorporates protective measures. The rocket body (2) is equipped with thermal shielding, while the deployment mechanism (5) is tested for reliability under extreme conditions. The fire suppressant sphere (4) formulation can be adapted to include non-toxic, eco-friendly ingredients. Fail-safe protocols are implemented, including backup circuits that engage a stable descent procedure or controlled payload jettison to prevent unintended suppressant release.

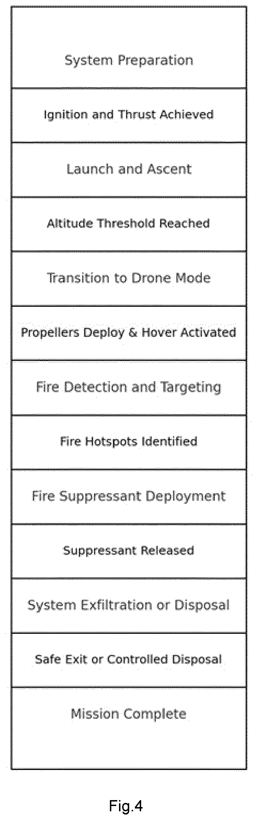

Figure 4 presents a block diagram illustrating the operational flow of the system of the invention. The system follows a structured sequence of stages, each dependent on a specific set of conditions before progressing to the next phase. The process begins with system preparation, during which the system is positioned on a launch pad or vehicle-mounted launcher. At this stage, onboard diagnostics are performed to ensure system integrity. The transition to the next stage, launch and ascent, occurs once the ignition process is completed, and sufficient thrust is achieved to propel the system into the air.

Once airborne, the ascent phase ensures that the hexagonal rocket body (2) stabilizes the system in flight. This phase continues until a predefined altitude threshold is reached, at which point the system transitions to drone mode. In this phase, the deployment mechanism (5) triggers the release of the propellers (1), allowing the system to hover and maneuver effectively.

With the system stabilized in drone mode, the fire detection and targeting phase is initiated. The onboard sensor array, including thermal and infrared sensors (7) and wind and pressure sensors (8), continuously scans the environment to locate fire hotspots. Once a target zone is identified, the system prepares for fire suppressant deployment, in which the fire suppressant sphere (4) is released either autonomously or via remote command. The suppressant disperses as a dry powder that transforms into a sticky gel upon contact with moisture and heat, ensuring optimal fire suppression.

Following suppressant deployment, the system enters the exfiltration or disposal phase, where it either lands for retrieval or follows a controlled self-disposal trajectory. If retrieval is chosen, the system uses its GPS and IMU unit (9) for precision landing. If disposal is required, a programmed burn-out sequence is executed to safely deactivate the system.

The process concludes with the mission complete phase, wherein system telemetry data is transmitted back to ground control for analysis and post-mission assessment. The communications module (10) ensures continuous data transfer throughout the operation, allowing for live monitoring and intervention if necessary.

To ensure safety and environmental compliance, the system incorporates protective measures. The rocket body (2) is equipped with thermal shielding, while the deployment mechanism (5) is tested for reliability under extreme conditions. The fire suppressant sphere (4) formulation can be adapted to include non-toxic, eco-friendly ingredients. Fail-safe protocols are implemented, including backup circuits that engage a stable descent procedure or controlled payload jettison to prevent unintended suppressant release.

Through its combination of advanced aerial deployment, autonomous flight control, and innovative fire suppression technology, the system of the invention provides a highly effective solution for combating wildfires, particularly in difficult-to-reach or volatile environments.

Through its combination of advanced aerial deployment, autonomous flight control, and innovative fire suppression technology, the system of the invention provides a highly effective solution for combating wildfires, particularly in difficult-to-reach or volatile environments.

Importantly, the above block diagram referred to herein illustrate the architecture, functionality, and operation of possible implementations of computer systems, methods, and devices according to embodiments of the present invention. In this regard, each block may represent a module, segment, or portion of instructions, which includes one or more executable instructions for implementing the specified logical function(s). In some alternative implementations, the functions indicated in the block may occur out of the order indicated in the figures. For example, two blocks shown in succession may, in fact, execute substantially concurrently, or the blocks may, on occasion, execute in the reverse order, depending on the functionality involved. It should also be noted that each block of the block diagrams and/or flowchart illustration, and combinations of the blocks of the block diagrams and/or flowchart illustration, may be implemented by specific-purpose hardware-based systems that perform the specified functions or acts or carry out combinations of specific-purpose hardware and computer instructions.

More specifically, the present invention may be implemented as a programmatically executable process. Further, the present invention may be implemented within a computing device in which programmatic instructions are stored and from which programmatic instructions may be loaded into the memory of a data processing system and executed therefrom in order to perform the above programmatically executable process. Likewise, the present invention may be implemented within a data processing system adapted to load programmatic instructions from a computing device and to then execute the programmatic instructions in order to perform the above programmatically executable process.

For this purpose, the computing device is a non-transitory computer-readable storage medium(s) that retains or store computer-readable program instructions. These instructions, when executed from memory by one or more processing units of a data processing system, cause the processing units to perform different example programmatic processes of different aspects of the programmatically executable process. In this sense, the processing units each include an instruction execution device, such as a central processing unit or "CPU" of a computer. One or more computers may be included in the data processing system. It should be noted that, although the CPU may be a single core CPU, it is to be understood that multiple CPU cores may operate within the CPU and, in either case, instructions are loaded directly from memory into one or more of the cores of one or more of the CPUs for execution.

Apart from direct loading of the instructions from memory for execution by one or more cores of a CPU or multiple CPUs, the computer-readable program instructions described herein may alternatively be fetched from a computer communications network into the memory of a computer of the data processing system for execution therein. Further, only a portion of the program instructions may be fetched into memory via the computer communications network, while other portions may be loaded from persistent storage of the computer. Also, only a portion of the program instructions may be executed by one or more processing cores of one or more CPUs of one of the computers of the data processing system, while other portions may be executed cooperatively within a different computer of the data processing system that is co-located with the computer or positioned remotely from the computer via the computer communications network, sharing the results of the computation of both computers.

The corresponding structures, materials, acts and equivalents of all stage plus function means or elements of the following claims are intended to include any structure, material, or act for carrying out the function in combination with other claimed elements as specifically claimed. The description of the present invention has been presented for illustrative and descriptive purposes but is not intended to be exhaustive or limited to the invention in the form disclosed. Many modifications and variations will be apparent to those skilled in the art without departing from the scope and spirit of the invention. The embodiments were chosen and described to better explain the principles of the invention and the practical application, and to enable others skilled in the art to understand the invention for various embodiments with various modifications as appropriate for the contemplated particular use.

## Claims

1. A fire suppression system for aerial deployment, comprising:
a hexagonal rocket body (2) configured to provide aerodynamic stability and structural integrity during launch and flight;
a set of retractable propellers (1) mounted on the rocket body (2), each configured to remain folded during ascent and to deploy upon reaching a target zone;
a payload compartment (3) positioned within the rocket body (2) and configured to house at least one fire suppressant sphere (4);
a deployment mechanism (5) operatively connected to the retractable propellers (1) and the payload compartment (3);
the deployment mechanism (5) being configured to:
release the propellers (1) to transition the system into drone mode, and
release the fire suppressant sphere (4) in a controlled manner over a fire zone;
a robot-on-chip control module (6) configured to process sensor data and execute autonomous flight and fire suppression operations;
a sensor array (7,8) further comprising:
thermal and infrared sensors (7) configured to detect fire hotspots,
wind and pressure sensors (8) configured to monitor environmental conditions, and
a GPS and IMU unit (9) configured to determine the position and orientation of the system; and
a communications module (10) configured to transmit operational data and allow remote control override.

2. The system, according to claim 1, wherein the hexagonal rocket body (2) is constructed from heat-resistant materials selected from carbon-fiber composites or titanium alloys.

3. The system, according to claim 1 or 2, wherein the retractable propellers (1) are spring-loaded and deploy automatically upon receiving a release signal from the robot-on-chip control module (6).

4. The system, according to at least one of claims 1 to 3, wherein the fire suppressant sphere (4) contains a dry chemical formulation that transitions into a sticky gel upon contact with atmospheric humidity.

5. The system according to any of claims 1 to 4, wherein the fire suppressant sphere (4) is released in either:
a capsule drop mode, wherein the sphere (4) ruptures upon impact to disperse the suppressant; or
a mid-air dispersal mode, wherein the suppressant is scattered before reaching the ground.

6. The system, according to any of claims 1 to 5, wherein the robot-on-chip control module (6) is configured to execute machine learning algorithms to optimize fire suppression by predicting wind shifts and adjusting suppressant release timing.

7. The system, according to any of claims 1 to 6, wherein the deployment mechanism (5) includes a fail-safe circuit configured to engage a controlled descent procedure in case of system failure.

8. A method for autonomous fire suppression using the system of claim 1, the method comprising:
launching the system from a predetermined location;
stabilizing the system in flight using the hexagonal rocket body (2);
deploying the retractable propellers (1) to transition into drone mode upon reaching a predefined altitude threshold;
acquiring fire hotspot data via the sensor array, wherein the thermal and infrared sensors (7) detect fire locations, and the wind and pressure sensors (8) determine environmental conditions;
determining an optimal fire suppressant release point using the robot-on-chip control module (6); and
releasing at least one fire suppressant sphere (4) via the deployment mechanism (5) in accordance with the acquired fire hotspot data.

9. The method, according to claim 8, wherein the fire suppressant sphere (4) is released in a capsule drop mode, wherein the sphere (4) ruptures upon impact to disperse the suppressant.

10. The method, according to claim 8, wherein the fire suppressant sphere (4) is released in a mid-air dispersal mode, wherein the suppressant is scattered before reaching the ground.

11. The method, according to any of claims 8 to 10, further comprises adjusting the system's flight path in real time based on environmental conditions detected by the wind and pressure sensors (8).

12. The method, according to any of claims 8 to 11, further comprising transmitting real-time telemetry data via the communications module (10) to a remote operator.

13. The method, according to any of claims 8 to 12, further comprising executing a fail-safe protocol to engage a controlled descent procedure upon completion of fire suppression operations or in the event of system failure.

14. The method, according to any of claims 8 to 13, wherein the robot-on-chip control module (6) executes an Al-driven optimization process to predict wind shifts and adjust suppressant release timing for enhanced fire suppression efficiency.

15. The method, according to any of claims 8 to 14, further comprising executing a retrieval or self-disposal procedure, wherein the system either lands for recovery or follows a controlled burnout trajectory.
